# EUROPEAN PATENT SPECIFICATION

(11) **EP 0 597 539 B1**
(45) Date of publication and mention of the grant of the patent: **04.09.1996**
(21) Application number: 93203113.1
(22) Date of filing: 06.11.1993
(51) Int. Cl.: F16L 1/036, H02G 9/04

(54) **Apparatus for the continuous automatic laying of constructional elements**
Vorrichtung zum fortlaufenden automatischen Verlegen von Bauelementen
Appareil pour la pose automatique continu d'éléments de construction

(30) Priority: 10.11.1992 IT MI922570
(43) Date of publication of application: 18.05.1994
(73) Proprietor: SIRTI S.p.A., I-20124 Milano (IT)
(72) Inventor: Falivene, Domenico, I-85042 Lagonegro (Potenza) (IT); Milanesi, Giovanni, I-29100 Piacenza (IT)
(74) Representative: Fusina, Gerolamo

(56) References cited:
- DE-U- 9 003 877
- US-A- 3 421 609
- US-A- 3 565 269
- US-A- 3 956 901

## Description

This invention relates to an apparatus for the continuous automatic laying of constructional elements.

Apparatus are known for automatically laying constructional elements, in particular prefabricated raceway elements for holding transmission cables. These apparatus are mainly used for laying prefabricated raceway elements in a continuous ground trench excavation to the side of railway tracks or carriageways In this manner the raceway elements can be correctly laid in an extremely short time with minimum use of personnel.

Such known apparatus have however certain operational problems due to their particular structure. In this respect, the raceway elements have to be arranged already orientated in their laying direction on a slide surface so that a pusher can feed them to a dropping chute by which they are discharged into the appropriate excavation, initially by a pusher then by gravity.

For correct operation of the apparatus the person loading the elements must therefore be continuously attentive while arranging the elements on the apparatus, otherwise hold-ups can occur during the sliding of the elements.

In addition, known laying apparatus have to be mounted on a railway truck or road truck in a properly determined fixed position so that the raceway elements are discharged in the required direction. All this results in considerable hindrance to laying due to the requirement for position location and possible reversal of the railway or road truck, and the need for accuracy of the excavation to enable the raceway elements to be installed.

US-A-3 956 901 relates to an apparatus according to the preamble of claim 1.

An object of the invention is to provide an apparatus for the continuous automatic laying of raceway elements which overcomes all the aforesaid drawbacks and allows rapid and correct laying without the need for special expedients.

A further object is to provide an extremely versatile apparatus which is rapidly or even automatically adaptable to the particular laying conditions.

These objects are attained according to the present invention by an apparatus for the continuous automatic laying of constructional elements, in particular raceway elements, according to claim 1.

The structural and operational features and the considerable advantages of an apparatus for laying constructional elements according to the present invention will be more apparent from the description given hereinafter by way of non-limiting example with reference to the accompanying schematic drawings, in which:

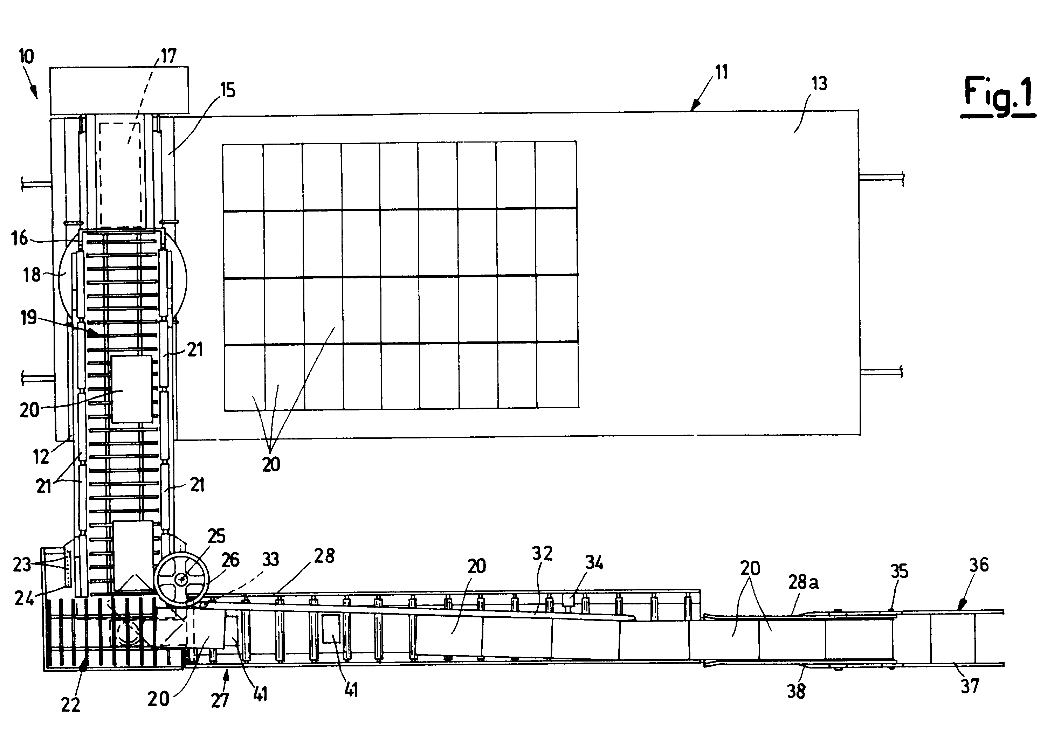

Figure 1 is a top plan view of an apparatus according to the present invention;

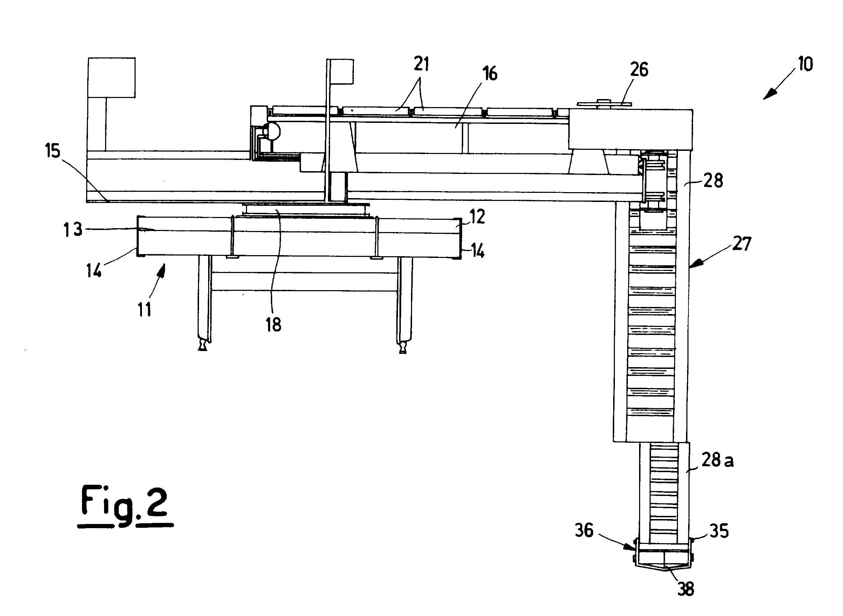

Figure 2 is a rear transverse view of the apparatus of Figure 1;
Figure 3 is a side view of the apparatus of Figure 1;

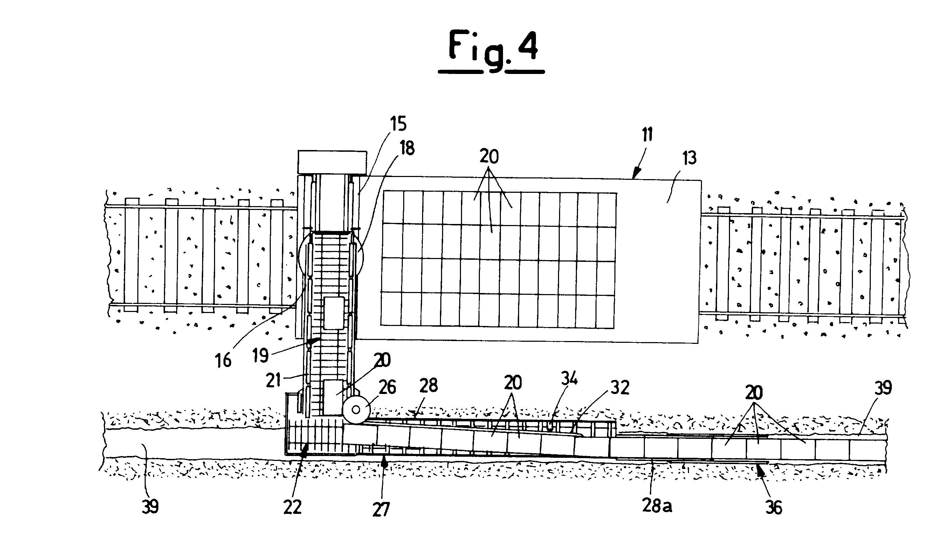

Figure 4 is a very schematic plan view of the apparatus of the invention operating along a railway line; and
Figure 5 in an enlarged perspective view of a detail of the apparatus of Figure 3.

With reference to the drawings, an apparatus for the continuous automatic laying of constructional elements, in particular raceway elements, according to the present invention is indicated overall by 10 and is positioned in the example transversely on a railway truck 11.

In this respect, the base 12 of the apparatus is fixed to the floor 13 of the railway truck 11 for example by tie bars 14, preferably in a longitudinal end region of the floor.

The base 12 supports a telescopic support frame consisting of two parts, namely a fixed part 15 and a movable part 16 which can be moved horizontally relative to the fixed part in a direction transverse to the railway truck 11 by a hydraulic actuator indicated schematically by 17.

The lower fixed part 15 is supported on the base 12 via a thrust bearing 18 which enables it to rotate through an angle of 180° in a clockwise or anticlockwise direction. The upper movable part 16 supports a first conveyor 19, for example of the slat type, which is arranged to receive raceway elements indicated schematically by 20. To the side of the first conveyor 19 there are guide elements 21, for example consisting of rollers which facilitate the loading of the raceway elements 20.

The first conveyor 19 moves transversely to the railway truck 11 rigidly with a second conveyor 22, constructionally similar to the first but positioned perpendicular thereto at the free end of the movable part 16 of the telescopic frame. The rotation shaft 25 of an idle wheel 26 is positioned, supported in a series of seats 23 provided in support bars 24, in the lateral connection regions between the two conveyors 19 and 22. Both the conveyors 19 and 22 are driven for example by hydraulic motors which can be operated in both directions of rotation.

One end of said second conveyor 22 is closed whereas with the other end there is associated one end of an articulated arm structure 27 on which there is a roller chute provided with a series of idle rollers for discharging the raceway elements to the ground.

The articulated arm 27 carrying a first part 28 of the roller chute is pivoted at 29 at said end to a support bracket 30 which is rotatable through 180° about the movable part 16 of the telescopic frame. It can also be raised and/or lowered in a vertical plane by an actuator 31 such as a hydraulic cylinder positioned between the support bracket 30 and the articulated arm 27. The front end part 28a of the roller chute is narrower than the first remaining part 28. In an alternative embodiment this front end part 28a is replacable to accommodate different sizes of raceway elements 20. On the part 28 there is a bar 32 pivoted at 33 and positionable by an actuator cylinder 34. The bar 32 acts as a conveyor element for the raceway elements 20 arriving from the second conveyor 22 so that they become correctly inserted into the front part 28a or alternatively can act as an element for halting the descent of the raceway elements.

To the end of the front part 28a there is pivoted at 35 a terminal element 36 comprising a guide element 37 and a mouldboard element 38. The mouldboard element is V-shaped to regularize the positioning channel 39 excavated in the ground and free it of material, while the guide element 37 correctly positions the raceway elements 20 one after another in the excavated channel.

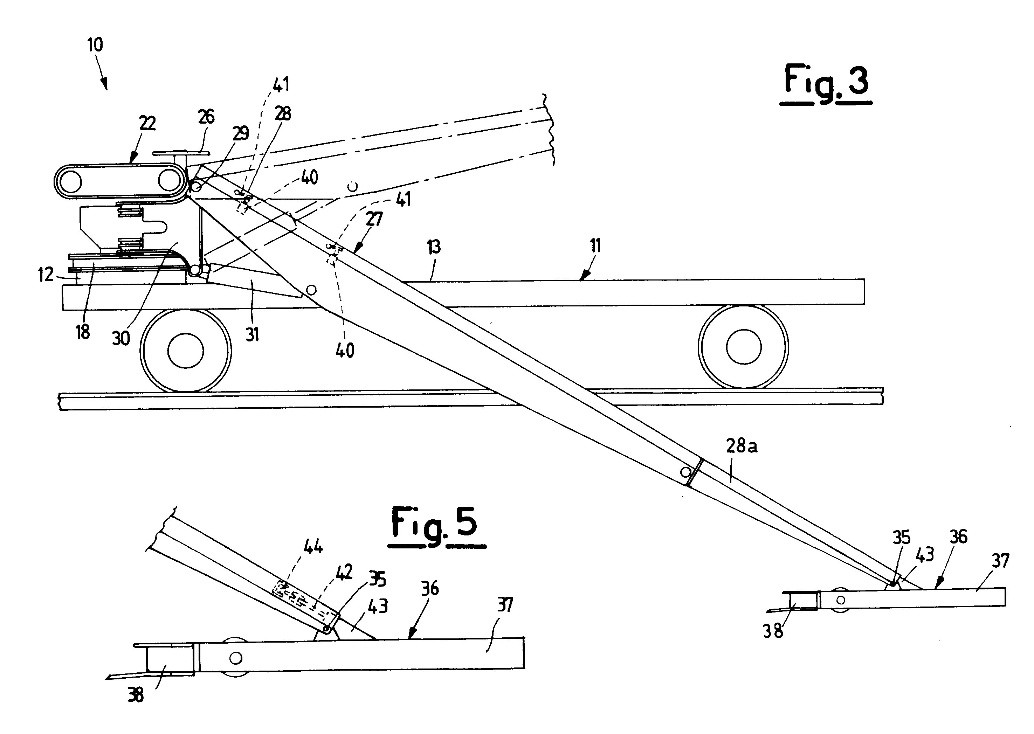

Two switches 40 are positioned in the first part 28 of the roller chute below the slide surface defined by the rollers, and are operated by plate elements 41 projecting upwards from the rollers (Figure 3). When the roller chute is filled with raceway elements, the two plates touch the switches, which then halt the advancement of the two conveyors.

On the front part 28a of the roller chute there is provided a rod element 42 connected to a bracket 43 supporting the terminal element 36. The end of the rod element 42 acts on a switch 44 operationally connected to the actuator 31 for raising and/or lowering the articulated arm 27 (Figure 5), to follow the ground pattern.

An apparatus for the continuous automatic laying of constructional elements, in particular raceway elements, according to the invention is positioned in the example transversely on the floor of a railway truck 11.

When in its non-operating position the two parts 15 and 16 of the support frame are in a rigidly retracted position and the articulated arm 27 is raised from the ground by the hydraulic cylinder 31.

When the railway truck 11 carrying the apparatus 10 of the invention reaches the laying position, where the continuous trench indicated schematically by 39 has previously been excavated, the subsequent procedure is as follows.

The movable part 16 is made to traverse relative to the fixed part 15 so that the apparatus extends as far as the excavation 39. In this respect, during the previous movement of the apparatus according to the invention the relatively movable parts 15 and 16 of the support frame will have been kept compact and retracted within the overall railway outline by the actuator 17, in order not to interfere with the electrical standards supporting the overhead power line.

When the movable part 16 has been extended to above the excavation, the articulated arm 27 is lowered so that the terminal element 36 becomes inserted into the excavation 39.

At this point the operator on the railway truck floor begins to locate the raceway elements 20 on the first conveyor 19 which in the meantime has been started. The movement of the first conveyor urges the raceway elements 20 towards the second conveyor 22 which in the meantime has also been started. The raceway elements 20 advance until they straddle both conveyors. The raceway elements 20 straddling the two conveyors are urged towards the edge where the idle wheel 26 has previously been positioned. This facilitates not only the sliding of the raceway elements 20 but also their rotation from a position nearly aligned with the first conveyor to a position aligned with the second conveyor, rotated through about 90° from the first.

The idle wheel 26 hence acts as a rotational or pivotal point variable with time, about which each raceway element 20 moves and rotates.

When the second conveyor 22 has properly received each raceway element 20 it feeds it to the first part 28 of the roller chute provided on the articulated arm 27.

The raceway elements then pass from the end part 28a of the chute into the excavated trench 39 by gravity.

If an electrical standard or other obstacle comes into proximity during the laying, the bar 33 is operated to halt the descending flow of raceway elements 20. The articulated arm 27 is then raised by operating the cylinder 31 and the second movable part 16 of the support frame is retracted above the first part 15.

The railway truck then advances beyond the obstacle or electrical standard and the reverse manoeuvre is carried out to extend the apparatus into its operating position. Having done this the railway truck is driven backwards into a position close to that point of the excavation in which the automatic laying of the raceway elements 20 had been abandoned.

At least one raceway element may have to be laid manually through a short connection distance in order to properly complete the laying within the preformed excavation.

During operation, the raceway elements 20 descend along the roller chute spaced apart so that the two switches 40 are alternately raised to allow the loading operation to continue. If the discharge of raceway elements 20 ceases to be continuous and the roller chute fills up, two of the raceway elements 20 will become positioned on the two switches 40 to close them by acting on the respective plate elements 41. In this manner the two conveyors 19 and 20 are halted, and the appropriate operator suspends the loading of further raceway elements 20 until the roller chute is again empty.

The switch 44 also acts to return the terminal element 36 into the horizontal position by operating the actuator cylinder 31 in one direction or the other if the positioning excavation is not regularly horizontal. The enabling signal for the movement of the actuator 31 is given by the rod element 42 rigidly connected to the terminal element 36. This arrangement provides correct continuous positioning of the raceway elements 20.

Using an apparatus in accordance with the present invention it is hence possible to continuously deposit constructional elements at a variable distance from its side.

Moreover, if it is required to also deposit the elements on the other side, the entire support frame can be rotated via its lower part 15 on the thrust bearing 18, to hence achieve an operating position rotated through 180°. Having done this the articulated arm is rotated by means of the support bracket 30 and the idle wheel 26 is set on that support bar 24 on the opposite side of the first conveyor 19.

The machine is thus ready to deposit the elements on the other side.

The present invention therefore provides an extremely versatile apparatus allowing considerable time saving in the laying of constructional elements.

The apparatus also allows a considerable saving in operating personnel, who can now work without having to exercise the maximum care required in the case of known apparatus.

For controlling the movement of the telescopic support frame and the articulated arm, the apparatus of the invention can use a radio-control unit allowing remote control directly by the operators supervising the correct positioning of the ducting or raceway elements within the relative excavation.

## Claims

1. An apparatus for the continuous automatic laying or constructional elements (20), in particular raceway elements, which is positionable transversely on the floor (13) of a railway truck or road truck (11) or the like and comprises a base (12) supporting a support frame (15,16), conveyor means (19,22) positioned on said support frame and an arm (27) provided with a series of rollers for discharging said raceway elements (20) to the ground, one end of said conveyor means being aligned with said series of rollers, characterised in that said support frame (15,16) is telescopic and consists of a fixed part (15) and a movable part (16) which can be moved horizontally relative to the fixed part in a direction transverse to said floor (13) by means of an actuator (17), wherein said fixed part (15) is supported on said base (12) via a thrust bearing (18) which enables it to rotate through an angle of ± 180° and said conveyor means comprise a first (19) and a second (22) conveyor arranged mutually perpendicular, and in that said arm (27) for discharging said raceway elements (20) is articulated and pivoted (29) at said end to a support bracket (30), which is rotatable through 180° about said movable part (16) of said telescopic support frame (15,16) and can be raised and/or lowered in a vertical plane by an actuator (31) positioned between said support bracket (30) and said articulated arm (27).

2. An apparatus as claimed in claim 1, characterised in that said movable part (16) supports said first conveyor (19), which is provided laterally with guide rollers (21).

3. An apparatus as claimed in claim 1, characterised in that said first conveyor (19) is positioned transversely to said floor (13) with one of its ends adjacent to said second conveyor (22), which is arranged perpendicular to the first conveyor (19) at the free end of said movable part (16) of said telescopic support frame (15,16).

4. An apparatus as claimed in claim 3, characterised in that an idle wheel (26) is provided in an adjustable position in at least one lateral connection region between said two conveyors (19,22).

5. An apparatus as claimed in claim 4, characterised in that the shaft (25) of said idle wheel (26) is positionable within a series of seats (23) provided in a support bar (24).

6. An apparatus as claimed in claim 1, characterised in that one end of said second to conveyor (22) is closed, with its other end there being associated to one end of the structure of said articulated arm (27).

7. An apparatus as claimed in claim 1, characterised in that said articulated arm (27) comprises a first part (28) and a second part (28a) which are provided with said series of rollers, said front end second part (28a) being narrower than said remaining first part (28).

8. An apparatus as claimed in claim 7, characterised in that said front end second part (28a) is replacable.

9. An apparatus as claimed in claim 1, characterised in that above said series of rollers of said articulated arm (27) for discharging said raceway elements (20) there is provided a pivoted bar (32, 33) positionable by an actuator (34) in order to act as a conveyor and/or blocking element for said raceway elements (20).

10. An apparatus as claimed in claim 1, characterised in that to the free end of said articulated arm (27) for discharging said raceway elements (20) there is pivoted (at 35) a terminal element (36) comprising a guide element (37) and a mouldboard element (38).

11. An apparatus as claimed in claim 10, characterised in that a rod element (42) connected to a further support bracket (43) for said terminal element (36) acts on a switch (44) operationally connected to an actuator (31) for raising and/or lowering said articulated arm (27).

12. An apparatus as claimed in claim 1, characterised in that within an initial part (28) of said series of rollers facing said second conveyor (22) there are positioned below the slide surface defined bv said series of rollers two switches (40) operated by upwardly projecting plate elements (41) acted upon by said constructional elements (20).

## Patentansprüche

1. Vorrichtung zum fortlaufenden automatischen Verlegen von Bauelementen (20), insbesondere Kanalelementen, die quer auf dem Boden (13) eines Gleisfahrzeugs oder Straßenfahrzeugs (11) o. ä. positionierbar ist und aufweist: einen Unterbau (12) der einen Stützrahmen (15, 16) hält, eine Fördereinrichtung (19, 22), die auf dem Stützrahmen positioniert ist, und einen Arm (27), der mit einer Reihe von Rollen zum Abgeben der Kanalelemente (20) in den Boden versehen ist, wobei ein Ende der Fördereinrichtung zu der Reihe von Rollen ausgerichtet ist,
dadurch gekennzeichnet, daß der Stützrahmen (15, 16) teleskopartig ist und aus einem festen Teil (15) und einem beweglichen Teil (16) besteht, das waagerecht gegenüber dem festen Teil in Querrichtung zu dem Boden (13) mittels eines Stellglieds (17) bewegt werden kann, wobei das feste Teil (15) auf dem Unterbau (12) über ein Schublager (18) gehalten wird, durch das es um einen Winkel von ± 180° drehen kann, und die Fördereinrichtung einen ersten (19) und einen zweiten (22) Förderer aufweist, die rechtwinklig zueinander angeordnet sind, und dadurch, daß der Arm (27) zum Abgeben der Kanalelemente (20) gelenkig und an dem Ende an einer Stützkonsole (30) schwenkbar gelagert (29) ist, die um 180° um das bewegliche Teil (16) des Teleskopstützrahmens (15, 16) drehbar ist und in einer senkrechten Ebene durch ein Stellglied (31) angehoben und/oder abgesenkt werden kann, das zwischen der Stützkonsole (30) und dem Gelenkarm (27) positioniert ist.

2. Vorrichtung nach Anspruch 1, dadurch gekennzeichnet, daß das bewegliche Teil (16) den ersten Förderer (19) hält, der seitlich mit Führungsrollen (21) versehen ist.

3. Vorrichtung nach Anspruch 1, dadurch gekennzeichnet, daß der erste Förderer (19) quer zu dem Boden (13) mit einem seiner Enden an dem zweiten Förderer (22) angrenzend positioniert ist, der rechtwinklig zu dem ersten Förderer (19) an dem freien Ende des beweglichen Teils (16) des Teleskopstützrahmens (15, 16) angeordnet ist.

4. Vorrichtung nach Anspruch 3, dadurch gekennzeichnet, daß ein Leerlaufrad (26) an einer einstellbaren Position in mindestens einem seitlichen Verbindungsbereich zwischen den beiden Förderern (19, 22) vorgesehen ist.

5. Vorrichtung nach Anspruch 4, dadurch gekennzeichnet, daß die Welle (25) des Leerlaufrads (26) innerhalb einer Reihe von Sitzen (23) positionierbar ist, die in einer Stützstange (24) vorgesehen sind.

6. Vorrichtung nach Anspruch 1, dadurch gekennzeichnet, daß ein Ende des zweiten Förderers (22) geschlossen ist, wobei sein anderes Ende mit einem Ende des Aufbaus des Gelenkarms (27) zusammenhängt.

7. Vorrichtung nach Anspruch 1, dadurch gekennzeichnet, daß der Gelenkarm (27) ein erstes Teil (28) und ein zweites Teil (28a) aufweist, die mit einer Reihe von Rollen versehen sind, wobei das zweite Teil (28a) des vorderen Endes schmaler als das restliche erste Teil (28) ist.

8. Vorrichtung nach Anspruch 7, dadurch gekennzeichnet, daß das zweite Teil (28a) des vorderen Endes austauschbar ist.

9. Vorrichtung nach Anspruch 1, dadurch gekennzeichnet, daß oberhalb der Reihe von Rollen des Gelenkarms (27) zum Abgeben der Kanalelemente (20) eine schwenkbare Stange (32, 33) vorgesehen ist, die durch ein Stellglied (34) positionierbar ist, um als Förderer und/oder Blockierungselement für die Kanalelemente (20) zu wirken.

10. Vorrichtung nach Anspruch 1, dadurch gekennzeichnet, daß an dem freien Ende des Gelenkarms (27) zum Abgeben der Kanalelemente (20) schwenkbar (bei 35) ein Abschlußelement (36) gelagert ist, das ein Führungselement (37) und ein Streichblechelement (38) aufweist.

11. Vorrichtung nach Anspruch 10, dadurch gekennzeichnet, daß ein Stabelement (42), das mit einer weiteren Stützkonsole (43) für das Abschlußelement (36) verbunden ist, auf einen Schalter (44) wirkt, der funktionell mit einem Stellglied (31) zum Anheben und/oder Absenken des Gelenkarms (27) verbunden ist.

12. Vorrichtung nach Anspruch 1, dadurch gekennzeichnet, daß innerhalb eines Anfangsteils (28) der Reihe von Rollen, die zu dem zweiten Förderer (22) weisen, unterhalb der durch die Reihe von Rollen gebildeten Gleitfläche zwei Schalter (40) positioniert sind, die durch nach oben vorragende Plattenelemente (41) betätigt werden, auf die die Bauelemente (20) wirken.

## Revendications

1. Dispositif pour la pose automatique en continu d'éléments de construction (20) en particulier d'éléments de chemin de roulement, qui peut être positionné transversalement sur le plancher (13) d'un camion routier ou d'un wagon de chemin de fer (11) ou similaire et qui comprend une base (12) supportant un bâti de support (15,16), des moyens transporteurs (19,22) positionnés sur ledit bâti de support et un bras (27) muni d'une série de rouleaux pour décharger lesdits éléments de construction (20) sur le sol, une extrémité desdits moyens transporteurs étant alignée avec ladite série de rouleaux, caractérisé en ce que ledit bâti de support (15,16) est télescopique et il comprend une partie fixe (15) et une partie mobile (16) qui peut être déplacée horizontalement par rapport à la partie fixe dans une direction transversale audit plancher (13) à l'aide d'un mécanisme de commande (17), dans lequel ladite partie fixe (15) est supportée par ladite base (12), par l'intermédiaire d'un palier de butée (18) qui lui permet de tourner selon un angle de ± 180° et lesdits moyens transporteurs comprennent un premier (19) et un second (22) convoyeur disposés mutuellement perpendiculairement, et en ce que ledit bras (27) pour décharger lesdits éléments de chemin de roulement (20) est monté articulé et à pivotement (29) à ladite extrémité, sur un support (30) qui peut tourner de 180° autour de ladite partie mobile (16) dudit bâti de support télescopique (15,16) et qui peut être soulevé et/ou abaissé dans un plan vertical par un mécanisme de commande (31) positionné entre ledit support (30) et ledit bras articulé (27).

2. Dispositif selon la revendication 1, caractérisé en ce que ladite partie mobile (16) supporte ledit premier convoyeur (19) qui est muni latéralement de rouleaux de guidage (21).

3. Dispositif selon la revendication 1, caractérisé en ce que ledit premier convoyeur (19) est positionné transversalement audit plancher (13), l'une de ses extrémités étant adjacents audit second convoyeur (22), qui est disposé perpendiculairement au premier convoyeur (19), à l'extrémité libre de ladite partie mobile (16) dudit bâti de support télescopique (15,16).

4. Dispositif selon la revendication 3, caractérisé en ce qu'on prévoit une roue folle (26) dans une position réglable dans au moins une région de liaison latérale entre lesdits deux convoyeurs (19,22).

5. Dispositif selon la revendication 4, caractérisé en ce que l'arbre (25) de ladite roue folle (26) peut être positionné selon une série de sièges (23) prévus sur une barre de support (24).

6. Dispositif selon la revendication 1, caractérisé en ce qu'une extrémité dudit second convoyeur (22) est obturée, son autre extrémité étant associée à une extrémité de la structure dudit bras articulé (27).

7. Dispositif selon la revendication 1, caractérisé en ce que ledit bras articulé (27) comprend une première partie (28) et une seconde partie (28a) qui sont munies de ladite série de rouleaux, ladite seconde partie d'extrémité frontale (28a) étant plus étroite que ladite première partie restante (28).

8. Dispositif selon la revendication 7, caractérisé en ce que ladite seconde partie d'extrémité frontale (28a) est remplaçable.

9. Dispositif selon la revendication 1, caractérisé en ce que, au-dessus de ladite série de rouleaux dudit bras articulé (27) on prévoit, pour décharger lesdits éléments de chemin de roulement (20), une barre pivotante (32,33) pouvant être positionnée grâce à un mécanisme de commande (34) de manière à agir comme un transporteur et/ou un élément de blocage pour lesdits éléments de chemin de roulement (20).

10. Dispositif selon la revendication 1, caractérisé en ce que sur l'extrémité libre dudit bras articulé (27), pour le déchargement desdits éléments (20) de chemin de roulement, pivote (en 35) un élément terminal (36) comprenant un élément de guidage (37) et un versoir (38).

11. Dispositif selon la revendication 10, caractérisé en ce qu'une tige (42) connectée à un autre support (43) pour ledit élément terminal (36) agit sur un commutateur (44) connecté, de façon opérationnelle, à un mécanisme de commande (31) pour soulever ou abaisser ledit bras articulé (27).

12. Dispositif selon la revendication 1, caractérisé en ce que, à l'intérieur d'une partie verticale (28) de ladite série de rouleaux faisant face audit second convoyeur (22), on positionne, sous la surface de glissement délimitée par ladite série de rouleaux, deux commutateurs (40) qui sont actionnés par des plaques en saillie vers le haut (41) sous l'action desdits éléments de construction (20).
